# FASCICULE DE BREVET EUROPEEN

(11) **EP 2 993 131 B1**
(45) Date de publication et mention de la délivrance du brevet: **29.03.2017**
(21) Numéro de dépôt: 15182588.2
(22) Date de dépôt: 26.08.2015
(51) Int. Cl.: B64G 1/22, F16M 11/38, H01Q 1/12

(54) **MAT DEPLOYABLE A DEPLOIEMENT SPONTANE AUTONOME ET SATELLITE COMPORTANT AU MOINS UN TEL MAT**
AUSFAHRBARER MAST MIT AUTONOMER SPONTANER AUSFAHRBEWEGUNG, UND SATELLIT, DER MIT MINDESTENS EINEM SOLCHEN MAST AUSGESTATTET IST
DEPLOYABLE MAST WITH AUTONOMOUS SPONTANEOUS DEPLOYMENT AND SATELLITE COMPRISING AT LEAST ONE SUCH MAST

(30) Priorité: 05.09.2014 FR 1401992
(43) Date de publication de la demande: 09.03.2016
(73) Titulaire: THALES, 92400 Courbevoie (FR)
(72) Inventeur: BAUDASSE, Yannick, 06156 CANNES LA BOCCA CEDEX (FR); VEZAIN, Stéphane, 06210 MANDELIEU (FR); LACROIX, Robain, 06156 CANNES LA BOCCA CEDEX (FR); GUINOT, François, 06156 CANNES LA BOCCA CEDEX (FR)
(74) Mandataire: Henriot, Marie-Pierre

(56) Documents cités:
- EP-A1- 1 676 776
- EP-A1- 2 143 641
- US-A- 5 239 793
- US-B1- 6 374 565

## Description

La présente invention concerne un mât déployable à déploiement spontané autonome et un satellite comportant au moins un tel mât. Elle s'applique notamment au domaine des équipements spatiaux qui doivent être déployés en orbite et plus particulièrement aux équipements spatiaux pour satellites, tels que des capteurs ou des antennes ou des instruments à longue focale tels que des télescopes par exemple.

Un mât déployable destiné à relier deux équipements spatiaux éloignés de plusieurs mètres tel que divulgué dans EP 1 676 776 est généralement constitué d'une pluralité de segments de mât empilés les uns au-dessus des autres, articulés entre eux et dont le déploiement est motorisé. Chaque segment de mât est généralement composé de plusieurs poutres rigides articulées par des charnières et bloquées par des verrous. Ce type de mât présente l'inconvénient de nécessiter l'utilisation d'un moteur pour le déploiement et présente un problème de masse importante et de fiabilité des articulations. En outre, les poutres étant rigides, le mât occupe, en position stockée, un encombrement important sous la coiffe d'un lanceur. L'espace alloué aux structures déployables sous la coiffe d'un lanceur étant limité, il est important de réduire l'encombrement du mât lorsqu'il est en position stockée, de façon à en optimiser la surface en position déployée. Ainsi, le mât doit présenter un rapport longueur déployée / volume gerbé le plus élevé possible tout en assurant une faible masse, une stabilité et une rigidité du mât en position déployée suffisamment élevées pour être compatibles des applications spatiales.

Le but de l'invention est de réaliser un mât déployable ne comportant pas les inconvénients des mâts déployables existants, présentant l'avantage d'être peu encombrant, léger, simple à réaliser, présentant une optimisation du volume du mât lorsqu'il est stocké sous la coiffe d'un lanceur, permettant un déploiement fiable en orbite sur une grande longueur et la maîtrise du déploiement sans utilisation d'un moteur et permettant une rigidité et une stabilité du mât lorsqu'il est déployé.

Pour cela, l'invention concerne un mât déployable à déploiement spontané autonome comportant au moins un bloc structural élémentaire ayant un axe de déploiement longitudinal X, le bloc structural élémentaire comportant deux plateformes respectivement inférieure et supérieure parallèles à un plan YZ orthogonal à l'axe X et N étages empilés les uns au-dessus des autres parallèlement à l'axe de déploiement longitudinal X, où N est supérieur à 1 et où i est compris entre 1 et N-1. Chaque étage comporte au moins six bras de liaison longitudinaux flexibles articulés par mètres-ruban, qui en position déployée sont dans des plans parallèles à l'axe X et sont inclinés sur l'axe X ; les N étages sont fixés entre eux deux à deux par l'intermédiaire de plateformes de liaison parallèles au plan YZ, deux étages inférieur et supérieur contigus étant décalés angulairement l'un par rapport à l'autre par une rotation autour de l'axe de déploiement X. Le mât comporte des moyens de régulation de la vitesse du déploiement du mât qui comprennent par exemple une poulie principale motorisée fixée à la plateforme inférieure, et des poulies secondaires non motorisées aptes à être entraînées par la poulie principale au moyen d'au moins un câble ou d'un ruban.

Les poulies secondaires peuvent être fixées à la plateforme supérieure et à chaque plateforme de liaison avec un même câble ou ruban reliant des poulies secondaires des différentes plateformes à la poulie principale.

Selon une alternative, les poulies secondaires sont fixées à la plateforme inférieure, la poulie principale est étagée et comporte autant d'étages que de poulies secondaires, et les moyens de régulation de la vitesse comprennent autant de câbles ou rubans que de poulies secondaires, respectivement fixés à la plateforme supérieure et à chaque plateforme de liaison.

Selon une autre alternative, les poulies secondaires sont fixées à la plateforme inférieure, la poulie principale est étagée et comporte autant d'étages que de poulies secondaires, et les moyens de régulation de la vitesse comprennent autant de câbles ou rubans que de poulies secondaires, respectivement fixés à la plateforme supérieure seulement.

Selon une caractéristique de l'invention, deux étages contigus respectivement inférieur et supérieur, sont fixés entre eux par une plateforme de liaison commune aux deux étages contigus.

De préférence, chaque plateforme supérieure, inférieure et de liaison comporte des pattes de fixation regroupées par paires régulièrement réparties, chaque patte de fixation étant dédiée à la fixation d'une extrémité d'un bras de liaison.

Selon une autre caractéristique de l'invention, les pattes de fixation sont orientées vers l'extérieur du mât et pour chaque paire de pattes de fixation, les bras de liaison en configuration pliée sont orientés d'un angle compris entre 0° et 45° dans le plan YZ, tangentiellement par rapport à la plateforme.

Chaque bras de liaison présente avantageusement des zones de pliage (=zones articulées par mètres-rubans) et des zones de non pliage à section en arc de cercle, telles que l'arc de cercle des zones de non pliage est plus long que celui des zones de pliage.

Les zones de pliage sont typiquement situées vers les deux extrémités du bras de liaison et en une zone intermédiaire, et les sections en arc de cercle des zones vers les extrémités peuvent être inversées (diamétralement opposées) par rapport à la section de la zone intermédiaire.

Au moins trois paires de pattes de fixation sont réparties autour des plateformes inférieure et supérieure, au moins six paires de pattes de fixation sont réparties autour de chaque plateforme de liaison. Lorsque les plateformes sont triangulaires les paires de pattes de fixation sont généralement réparties aux sommets des triangles mais ce n'est pas indispensable.

Tous les bras de liaison sont avantageusement identiques et de mêmes longueurs.

Le mât déployable peut comporter plusieurs blocs structuraux identiques empilés les uns au-dessus des autres.

Un dispositif de verrouillage-libération du déploiement est avantageusement positionné sur chaque plateforme de liaison pour permettre après le déploiement de ladite plateforme, la libération de la plateforme contigüe qui lui est supérieure.

Les extrémités de bras de liaison sous forme de mètres-rubans ont un profil variant selon la position déployée ou pliée des bras de liaison ; selon une caractéristique de l'invention, le dispositif de verrouillage-libération comporte des moyens de verrouillage-libération en fonction dudit profil.

L'invention a aussi pour objet un satellite caractérisé en ce qu'il comporte au moins un mât déployable à déploiement spontané autonome tel que décrit précédemment.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple de mât selon l'invention à six étages, en position déployée,
la figure 2 représente schématiquement en perspective un exemple de mât selon l'invention à trois étages en cours de déploiement,
les figures 3 représentent schématiquement un exemple de mât selon l'invention en position stockée, vu en perspective (fig. 3a) et vu de dessus (fig. 3b),
les figures 4 représentent schématiquement en perspective des exemples de bras de liaison équipés de mètres-ruban selon l'invention, à section continue (fig. 4a et 4b), et à sections évolutives montrées en configurations pliée et déployée (fig. 4c et 4d),
les figures 5 représentent schématiquement vu en coupe un premier exemple de moyens de régulation de la vitesse du déploiement d'un mât selon l'invention à quatre étages, en configuration stockée (fig. 5a) et en cours de déploiement (fig. 5b), pour un déploiement synchronisé des différents étages du mât,
la figure 6 représente schématiquement vu en coupe un deuxième exemple de moyens de régulation de la vitesse du déploiement d'un mât selon l'invention à quatre étages, en cours de déploiement, pour un déploiement synchronisé des différents étages du mât,
les figures 7 représentent schématiquement vu en coupe un exemple de moyens de régulation de la vitesse du déploiement d'un mât selon l'invention, à quatre étages, en configuration stockée (fig. 7a), en cours de déploiement (fig. 7b et 7c) et déployé (fig.7d), pour un déploiement séquentiel des différents étages du mât.

D'une figure à l'autre, les mêmes éléments sont repérés par les mêmes références.

Dans la suite de la description, les expressions « inférieur », « supérieur », « bas, « haut » sont utilisées en référence à l'orientation des figures décrites. Dans la mesure où le dispositif peut être positionné selon d'autres orientations, la terminologie directionnelle est indiquée à titre d'illustration et n'est pas limitative.

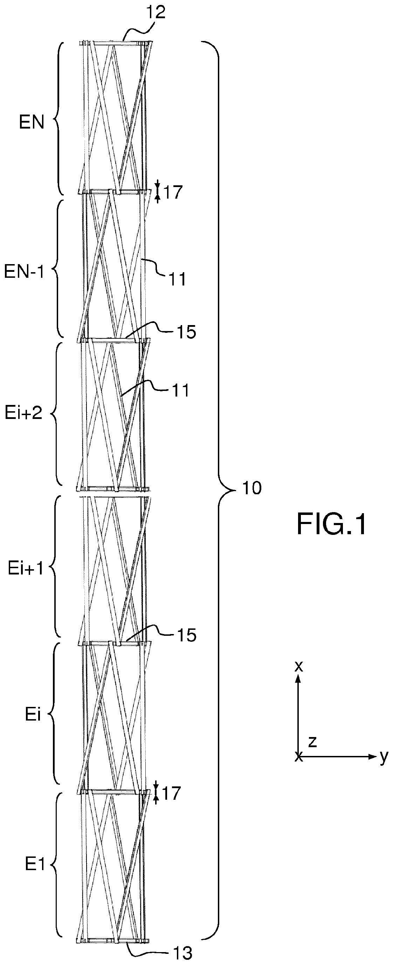

La figure 1 illustre un exemple de mât déployable conforme à l'invention, en position déployée selon un axe de déploiement longitudinal X, le mât comportant un bloc structural élémentaire à plusieurs étages. Un bloc structural élémentaire 10 est au moins constitué d'une plateforme inférieure 13, d'une plateforme supérieure 12, d'une ou plusieurs plateformes de liaison 15 et de N étages E1,...,Ei, Ei+1,...,EN, où N est un nombre entier supérieur à un et i est compris entre 1 et N-1 inclus, empilés les uns au-dessus des autres parallèlement à l'axe de déploiement longitudinal X et fixés rigidement entre eux deux à deux. Deux étages contigus Ei et Ei+1 peuvent être fixés entre eux par l'intermédiaire d'une plateforme de liaison 15 commune aux deux étages contigus. Les deux plateformes inférieure 13 et supérieure 12 et les plateformes de liaison 15 sont parallèles à un plan YZ orthogonal à l'axe X ; elles sont rigides et ont une forme de préférence symétrique autour de l'axe X telle que par exemple une forme de disque ou d'anneau, ou peuvent avoir un contour périphérique polygonal (triangulaire par exemple comme montré sur les figures) ou circulaire.

Un étage du bloc structural élémentaire 10 comporte au moins six bras de liaison équipés de mètres-ruban (en anglais : tape-spring) 11 qui déployés s'étendent dans des plans parallèles à l'axe X, et dont les extrémités sont respectivement fixées à une plateforme supérieure 12 ou une plateforme inférieure 13 ou une plateforme de liaison 15. Les mètres-ruban sont tous identiques, ont tous la même longueur et la même forme. Chaque bras de liaison équipé de mètre-ruban comporte une extrémité inférieure fixée rigidement à une plateforme d'un étage inférieur Ei et une extrémité supérieure fixée rigidement à une plateforme d'un étage supérieur Ei+1 contigu à l'étage inférieur Ei. A cet effet, chaque plateforme supérieure et inférieure et chaque plateforme de liaison comporte des pattes de fixation 14 réparties sur sa périphérie, chaque patte de fixation étant dédiée à la fixation d'une extrémité d'un bras de liaison équipé de mètre-ruban.

Il est possible d'augmenter la longueur du mât en empilant plusieurs blocs structuraux élémentaires les uns au-dessus des autres.

La demanderesse a décrit dans la demande de brevet EP 14160636.8 un mât déployable à déploiement spontané autonome comportant des plateformes reliées entre elles par au moins trois mètres rubans. En position déployée, les mètres rubans sont parallèles à l'axe X du mât et en position gerbée ils sont pliés en deux dans le sens de la longueur radialement vers l'intérieur du mât ou vers l'extérieur. Cette structure offre cependant quelques problèmes de stabilité lors du déploiement : les rubans peuvent se déployer d'une manière non synchronisée et non régulée du fait de la position et de l'orientation des rubans. En déployé, l'orientation des rubans ne permet pas d'opposer de résistance à la torsion.

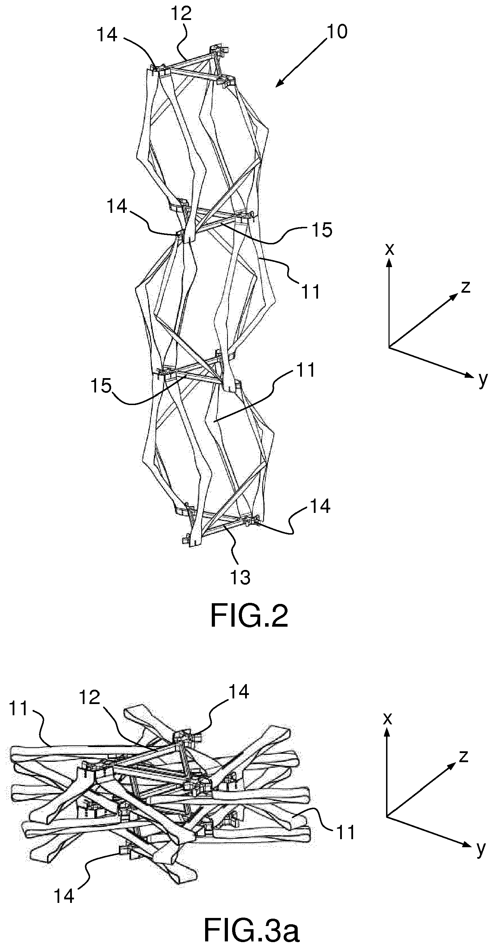

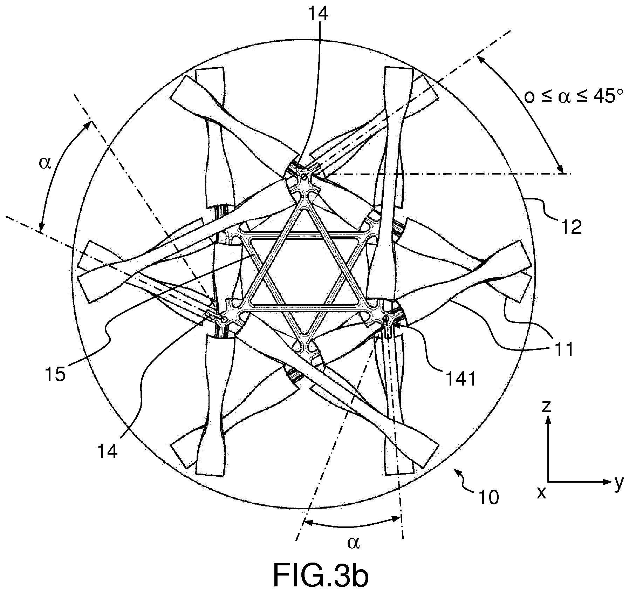

Selon l'invention, en position déployée les bras de liaison articulés par mètres-ruban sont dans des plans parallèles à la direction X de déploiement, mais comme illustré figure 2 ils ne se déploient pas parallèlement à l'axe X du mât ; déployés ils sont inclinés par rapport à X comme on peut le voir sur la figure 1. Cette inclinaison permet aux bras de liaison équipés de mètres-ruban de reprendre les charges et les moments appliqués sur les plateformes sous forme d'effort suivant leur axe de déploiement (c'est-à-dire suivant leur propre fibre neutre) ce qui est plus favorable en termes de reprise de charge. Entre deux plateformes contigües et lorsqu'ils sont déployés, ils forment par paires des figures ressemblant à des Vs et/ou des Vs inversés, la pointe des V pouvant être plus ou moins pointue selon l'espacement des pattes de fixation des extrémités des bras de liaison. Plus cet espacement est réduit plus le passage d'effort est direct, ce qui permet d'équilibrer la poussée entre les bras de liaison équipés de mètres-ruban et ainsi d'accroître la rigidité. En configuration gerbée (ou stockée) montrée figures 3a et 3b, les bras de liaison équipés de rubans ne sont pas pliés radialement ; ils sont pliés en deux selon leur longueur vers l'extérieur et chaque ruban plié forme typiquement avec une des deux plateformes auxquelles il est fixé, un angle α compris entre 0° et 45°, ce qui offre une meilleure stabilité de déploiement et est moins encombrant. L'angle α est défini par la direction d'un bras de liaison plié par rapport à la tangente à un cercle passant dans un plan YZ par les zones d'ancrage des pattes de fixation. Cet angle α est typiquement déterminé en fonction de la longueur du mât, de son volume en configuration stockée et de la rigidité souhaitée.

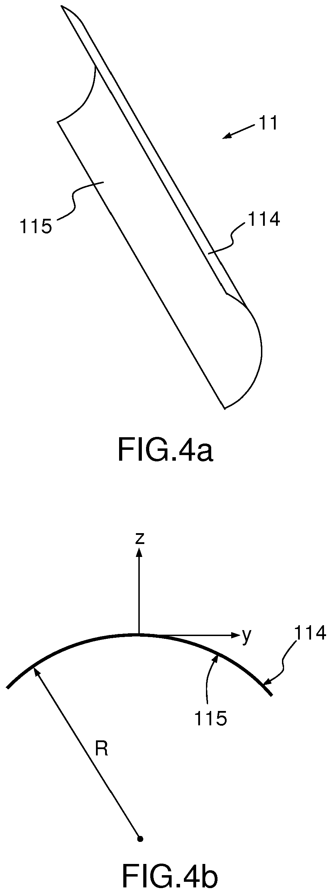

Les mètres-ruban sont connus dans le domaine spatial comme étant des rubans ou des lames flexibles ayant une première face 114 convexe, une deuxième face 115 concave et ayant une section en arc de cercle de rayon de courbure R, comme représenté par exemple sur les figures 4a et 4b. Les mètres-ruban ont une tendance naturelle à se déployer longitudinalement de manière autonome, essentiellement grâce à leur énergie élastique propre, sans utilisation d'un moteur.

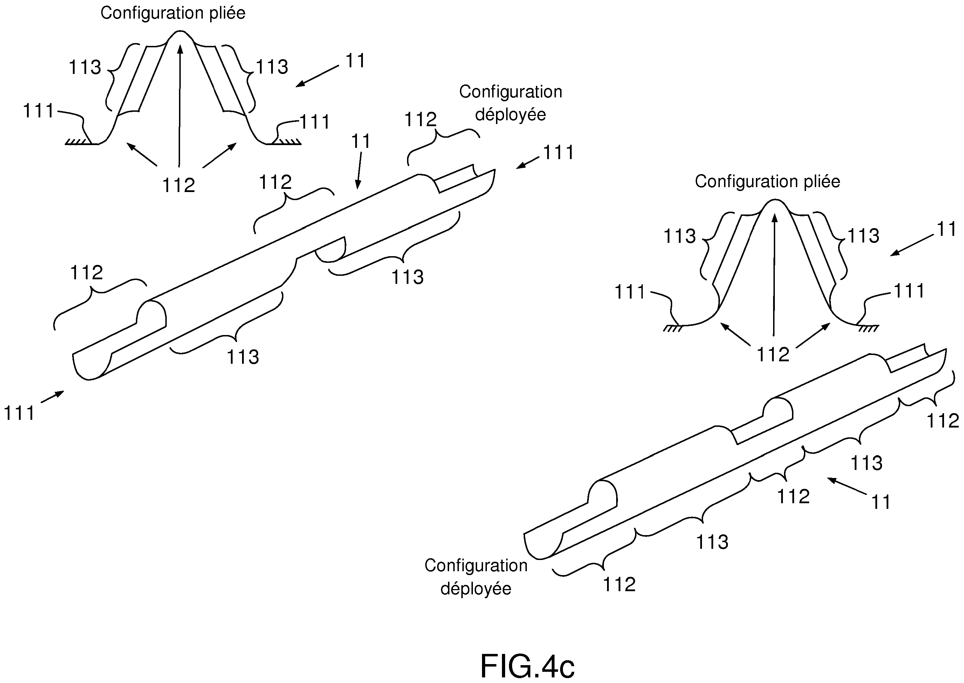

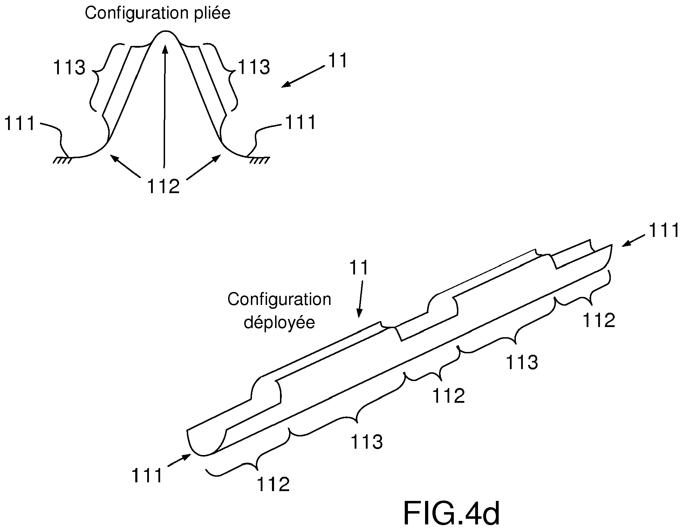

Dans le cadre de l'invention, on peut utiliser des bras de liaison équipés de mètres-ruban du commerce à section constante sur toute la longueur du mètre-ruban. Comme montré figures 4c et 4d avec pour chaque cas le bras de liaison en configuration pliée et déployée, on peut aussi utiliser des mètres-ruban qui ont une section évolutive sur leur longueur afin d'optimiser les performances ; typiquement le besoin de section en arc de cercle n'est indispensable qu'au droit des pliages. Chaque bras de liaison présente des zones de pliage 112 articulées par mètres-ruban, qui sont situées vers les deux extrémités 111 et en une zone intermédiaire, et des zones de non pliage 113. Selon un mode de réalisation de l'invention, les zones de non pliage 113 présentent une section à arc de cercle plus long que l'arc de cercle des zones de pliage 112 comme montré figure 4d, et qui peut être maximal formant alors un cercle complet qui définissent alors des zones tubulaires comme montré figure 4c : ceci favorise la tenue au flambage. En outre, les sections en arc de cercle des zones de pliage aux extrémités 111 peuvent être inversées par rapport à la section de la zone intermédiaire de pliage comme montré figure 4c : on obtient ainsi une même force de déploiement sur toutes les zones pliées. Lorsque les sections en arc de cercle sont identiques pour toutes les zones de pliage, on obtient des forces de déploiement différentes suivant les zones pliées. Dans l'exemple de la figure 4d, le bras de liaison comporte un mètre-ruban sur toute sa longueur.

Les mètres-ruban peuvent être orientés de façon à présenter leur face concave orientée vers l'extérieur du mât, mais il est également possible de les orienter en sens contraire de façon qu'ils présentent leur face concave orientée vers l'intérieur du mât.

On se reporte à la figure 1. Chaque étage comporte au moins six bras de liaison 11 équipés de mètres-ruban s'étendant en position déployée, dans des plans parallèles à l'axe de déploiement longitudinal X et inclinés par rapport à l'axe X, les six bras de liaison 11 équipés de mètres-ruban 11 comportant deux extrémités opposées respectivement fixées sur des plateformes de liaison 15 ou sur la plateforme supérieure 12 ou sur la plateforme inférieure 13. Pour assurer la fixation des extrémités des bras de liaison 11 des deux étages contigus Ei, Ei+1, le nombre de pattes de fixation 14 de chaque plateforme de liaison 15 est deux fois plus important que le nombre de bras de liaison 11 d'un étage Ei du bloc structural élémentaire 10. Ainsi, dans le cas où chaque étage Ei du bloc structural élémentaire comporte six bras de liaison 11, chaque plateforme de liaison 15 comporte douze pattes de fixation regroupées en six paires de préférence régulièrement réparties autour de la plateforme : trois paires sur lesquelles sont respectivement fixés six bras de liaison 11 de l'étage inférieur Ei et trois paires sur lesquelles sont respectivement fixés six bras de liaison 11 de l'étage contigu supérieur Ei+1. De préférence ces six paires sont elles-mêmes regroupées en trois quadruplets 141 de pattes de fixation que l'on peut voir figure 3b. Un étage comportant huit bras de liaison comportera deux fois quatre paires de pattes de fixation, de préférence regroupées en quatre quadruplets, etc.

Les pattes de fixation 14 sont orientées de façon qu'elles s'étendent vers l'extérieur du bloc structural élémentaire 10 et donc vers l'extérieur du mât. Elles sont solidaires de chaque plateforme de liaison et sont typiquement montées sur la périphérie externe de chaque plateforme.

Ces pattes de fixation peuvent être directement attachées à la plateforme. Les pattes de fixation 14 solidaires de chaque plateforme de liaison 15 peuvent être situées dans le plan YZ de la plateforme de liaison 15 correspondante ou être inclinées par rapport au plan YZ de cette plateforme, l'inclinaison étant orientée dans des sens opposés pour les bras de liaison de l'étage supérieur Ei+1 par rapport à l'étage inférieur Ei. Les pattes de fixation des bras de liaison de l'étage inférieur Ei peuvent être inclinées vers le haut du mât alors que les pattes de fixation des bras de liaison de l'étage supérieur Ei+1 peuvent être inclinées vers le bas du mât, de façon à créer une zone de recouvrement 17 longitudinale entre deux étages contigus Ei et Ei+1, ce qui présente l'avantage d'augmenter la rigidité du mât et d'améliorer la compacité du bloc structural élémentaire 10 lorsqu'il est replié en position stockée. Deux plateformes de liaison 15 consécutives, appartenant donc à un même étage Ei, comportent ainsi des pattes de fixation orientées dans des sens opposés par rapport au plan YZ des deux plateformes de liaison.

Selon une alternative, les pattes de fixation 14 d'un quadruplet sont attachées à la plateforme au moyen d'une zone d'ancrage par exemple à 5 branches réparties en étoile, l'une dans le prolongement du pourtour de la plateforme, les autres dédiées aux quatre pattes de fixation comme on peut le voir sur la figure 3b, avec deux branches dédiées à la fixation des mètres-ruban de l'étage inférieur Ei, et les deux autres branches dédiées à la fixation des mètres-ruban de l'étage supérieur Ei+1.

Les extrémités des bras de liaison 11 de chaque étage Ei peuvent être fixées par encastrement au moyen de brides montées sur les pattes de fixation 14 des plateformes de liaison 15 ou sur les pattes de fixation 14 des plateformes supérieure 12 ou inférieure 13, ou peuvent être fixées par rivetage, vissage ou par collage. Dans le cas où le mât comporte plusieurs blocs structuraux élémentaires 10, les plateformes inférieure 13 et supérieure 12 situées à la base et au sommet de chaque bloc structural élémentaire 10 assurent la liaison entre les bras de liaison 11 de deux blocs structuraux élémentaires consécutifs.

Préférentiellement, pour que le mât soit équilibré, les pattes de fixations 14 et les bras de liaison 11 équipés de mètres-ruban 11 qui y sont fixés, sont régulièrement espacés autour de l'axe de déploiement longitudinal X et pour chaque plateforme de liaison, les angles séparant deux quadruplets de pattes de fixation peuvent avoir des valeurs identiques.

Deux étages contigus sont décalés angulairement l'un par rapport à l'autre par une rotation autour de l'axe de déploiement X de façon à intercaler les bras de liaison équipés de mètres-ruban d'un étage inférieur Ei entre les bras de liaison équipés de mètres-ruban d'un étage contigu supérieur Ei+1, et à intercaler les pattes de fixation d'un étage inférieur Ei entre les pattes de fixation d'un étage contigu supérieur Ei+1 et pour qu'entre deux plateformes consécutives, les bras de liaison équipés de mètres-ruban forment des figures en Vs et/ou Vs inversés.

Lorsqu'un bloc structural élémentaire 10 est replié en position stockée, il se trouve dans un état compact et toutes les plateformes supérieure 12, inférieure 13 et de liaison 15 séparant les différents étages du bloc structural élémentaires sont empilées les unes au-dessus des autres comme représenté sur les vues des figures 3a et 3b où l'on peut voir les bras de liaison équipés de mètres-ruban repliés vers l'extérieur du mât. Sur la figure 1, le bloc structural élémentaire 10 comporte six étages avec six bras de liaison équipés de mètres-ruban par étage, soit un total de 36 bras de liaison régulièrement répartis sur la circonférence d'une couronne annulaire constituée d'un empilement de toutes les plateformes supérieure, inférieure et de liaison du bloc structural élémentaire dans l'état gerbé. Dans l'état compact, les bras de liaison 11 sont repliés en deux sur eux-mêmes dans le sens de leur longueur, le pliage étant réalisé vers l'extérieur du mât avec les pattes de fixation s'étendant vers l'extérieur du mât comme représenté sur les figures 3a et 3b. Deux plateformes de liaison 15 consécutives, appartenant donc à un même étage Ei, comportent des zones d'ancrage dont l'écartement est déterminé de façon à assurer un pliage élastique maximal des bras de liaison équipés de mètres-ruban. Cet écartement est identique pour chaque couple de zones d'ancrage.

Les bras de liaison 11 équipés de mètres-ruban sont réalisés dans un matériau compatible avec un environnement spatial et peuvent être réalisés dans un matériau métallique ou dans un matériau composite tel que par exemple des fibres de carbone noyées dans une résine époxy ou dans une résine cyanate. Les matériaux composites sont préférés car ils ont un coefficient de dilatation beaucoup plus faible en température que les matériaux métalliques. Les plateformes supérieure et inférieure et les plateformes de liaison sont de préférence en carbone.

Le mât ne comporte aucune articulation en tant que telle, ni aucune charnière, ni aucun pivot, ni aucun moteur de déploiement. En position stockée, tous les bras de liaison 11 équipés de mètres-ruban 11 de tous les étages structuraux élémentaires Ei stockent de l'énergie élastique due aux contraintes qui les maintiennent en position pliée en deux. Le maintien des bras de liaison 11 équipés de mètres-ruban en position pliée est assuré par un système de gerbage maintenant les différentes plateformes en configuration stockée. Le déploiement du mât est initié par la libération du système de gerbage. Le déploiement est alors réalisé de manière passive par relâchement des contraintes sur les mètres-ruban lors de leur dépliement et à la libération de l'énergie élastique stockée par les mètres-ruban. Pour que le déploiement ne soit pas trop violent, on utilise de préférence des moyens de régulation de vitesse permettant de contrôler le déploiement du mât. Par exemple, la vitesse du dépliement des mètres-ruban peut être contrôlée par un déroulement progressif d'un câble géré par un moteur.

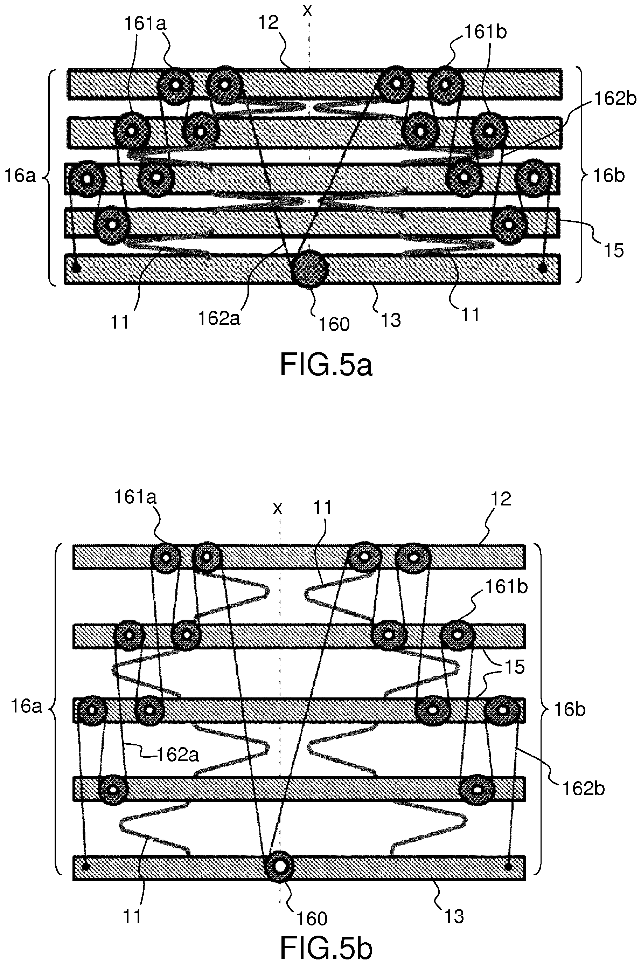

Ces moyens de régulation de la vitesse de déploiement sont avantageusement répartis en au moins trois dispositifs de régulation de vitesse identiques ; ils en comportent trois dans notre exemple répartis sur la périphérie des plateformes. Ces moyens de régulation de vitesse sont décrits en relation avec les figures 5, 6 et 7 sur lesquelles on peut voir en coupe deux dispositifs de régulation de vitesse 16a et 16b. Chaque dispositif de régulation de vitesse 16a ou 16b comporte typiquement :
- une seule poulie principale motorisée 160 fixée à la plateforme inférieure et commune à tous les dispositifs de freinage 16a, 16b, et
- des poulies secondaires non motorisées 161 a, 161 b aptes à être entraînées par la poulie principale 160 au moyen d'au moins un câble de liaison 162a, 162b. On peut remplacer le câble par un ruban c'est-à-dire une bande à section plate. Il est également possible d'enrouler simultanément sur le même étage de poulie plusieurs câbles ou bandes comme représenté sur les figures 5a et 5b La poulie principale peut comporter plusieurs gorges pour entraîner plusieurs câbles.

On distingue des moyens de régulation de vitesse à déploiement synchronisé, tous les étages se déployant de manière synchronisée et des moyens de régulation de vitesse à déploiement séquentiel, le premier étage se déployant alors avant le deuxième qui se déploie avant le troisième etc.

Selon un premier mode de réalisation dont un exemple est montré figures 5a et 5b, un dispositif de régulation de vitesse de moyens à déploiement synchronisé 16a ou 16b qui comporte une ou deux poulies secondaires 161 a, 161 b fixées à la plateforme supérieure 12 et à chaque plateforme de liaison 15 ; un même câble ou ruban 162a, 162b relie les poulies secondaires de différentes plateformes à la poulie principale 160.

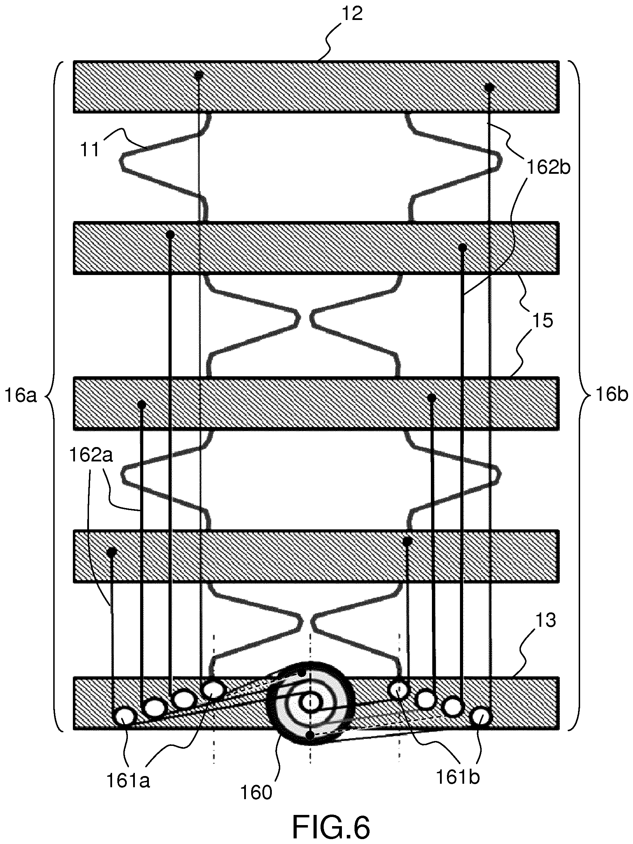

Selon une autre configuration décrite en relation avec la figure 6, un dispositif de régulation de vitesse 16a ou 16b de moyens à déploiement synchronisé comporte :
- des poulies secondaires 161 a, 161 b fixées à la plateforme inférieure 13, et respectivement dédiées à la plateforme supérieure 12 et à chaque plateforme de liaison 15,
- des câbles de liaison 162a, 162b ou rubans reliant respectivement la poulie principale 160 à ladite plateforme supérieure ou de liaison, via la poulie secondaire correspondante. Cette poulie principale est étagée et les diamètres des différents étages de poulie sont calculés pour permettre un déploiement homogène des différents étages. Dans le cas d'une configuration à 4 étages, la plateforme supérieure devant parcourir une distance 4 fois supérieure à celle du 1^{er} étage, les diamètres de la poulie étagée principale 160 devront donc comporter l'écart correspondant.

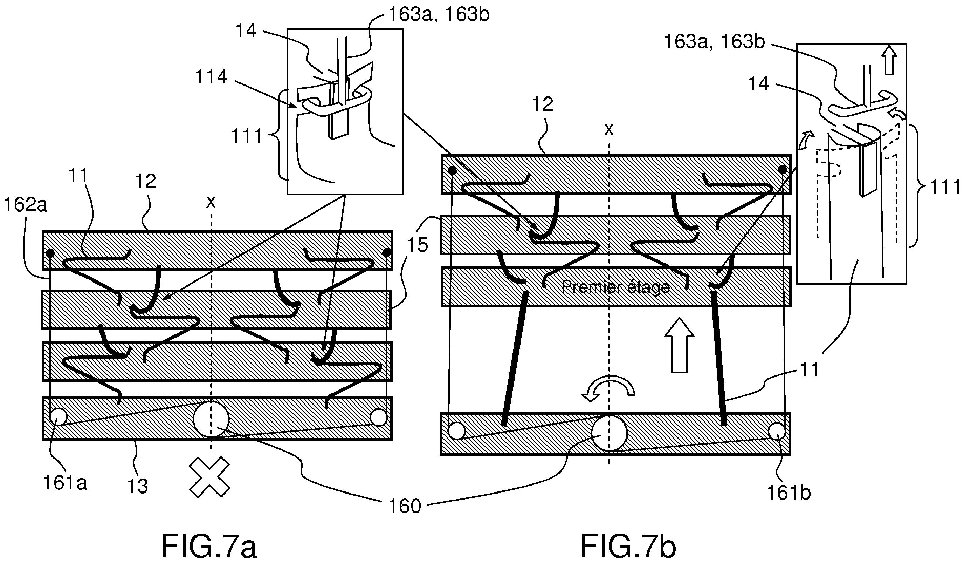

Selon un autre mode de réalisation dont un exemple est montré figures 7a à 7d, un dispositif de régulation de vitesse 16a ou 16b de moyens à déploiement séquentiel comporte :
- une seule poulie secondaire 161 a, 161b fixée à la plateforme inférieure 13,
- un même câble ou ruban 162a, 162b reliant la poulie principale 160 à la plate forme supérieure 12 via cette poulie secondaire, et
- un dispositif de verrouillage/libération des plateformes de liaison 15 et supérieure 12.

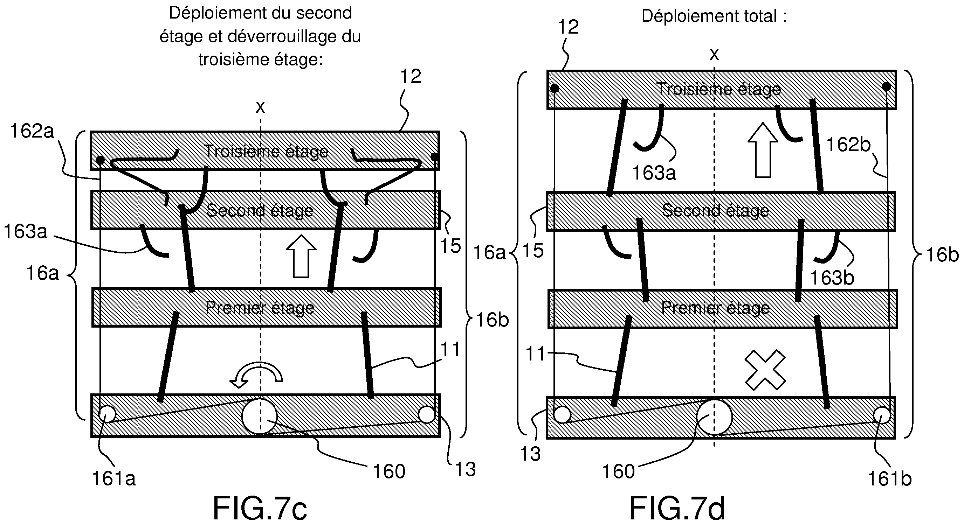

Ce dispositif de verrouillage/libération montré figures 7a et 7b en zoom, comporte pour chaque étage Ei un crochet 163a, 163b lié à la plateforme supérieure 12 ou à la plateforme de liaison 15 supérieure de cet étage Ei (sauf éventuellement la plateforme de liaison supérieure de l'étage E1, le déploiement de ce premier étage étant commandé par la libération du système de gerbage maintenant la structure en configuration stockée pendant les phase de lancement, et maintenu ensuite, puis régulé en vitesse par la poulie principale selon qu'elle est à l'arrêt comme symbolisé par une X sur les figures 7a et 7d, ou en marche comme symbolisé par une flèche arrondie sur les figures 7b et 7c). L'autre extrémité du crochet est destinée à être accrochée pendant le verrouillage à la plateforme de liaison inférieure de cet étage Ei de la manière suivante. Cette autre extrémité a une forme en « U » dans le plan YZ de cette plateforme inférieure, les branches du « U » venant s'engager dans des encoches prévues à cet effet dans l'extrémité 111 supérieure du bras de liaison 11 (cette extrémité est sous forme d'un mètre-ruban) lui-même fixé à cette plateforme inférieure. Lorsque cette plateforme inférieure est en position stockée, cette extrémité 111 est aplatie et les branches du « U » sont engagées dans le mètre-ruban bloquant ainsi son déploiement : la plateforme inférieure est alors accrochée à sa plateforme supérieure par le crochet. Le déploiement du bras de liaison équipé de mètres ruban entraine la déformation de ces extrémités qui reprennent leur forme curviligne (position repos). Dès que cette extrémité 111 se courbe vers l'intérieur du « U » grâce à son énergie élastique, les branches du « U » sont libérées des encoches : le crochet ne bloque plus le déploiement du mètre-ruban. Les crochets sont ainsi libérés de proche en proche de manière séquentielle ainsi donc que les plateformes de liaison 15 et la plateforme supérieure 12 correspondantes. Ce dispositif de verrouillage-libération peut aussi être installé sur le mât indépendamment des autres éléments (poulies, câbles, etc) des moyens de régulation de la vitesse.

Pour des applications spatiales, le mât peut être utilisé par exemple pour éloigner un appareil ou une antenne de la caisse d'un satellite. Dans ce cas, la plateforme inférieure 13 de l'étage inférieur du mât est fixée sur la caisse du satellite et l'appareil à éloigner est fixé à la plateforme supérieure 12 de l'étage supérieur du mât.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Mât déployable à déploiement spontané autonome comportant au moins un bloc structural élémentaire (10) ayant un axe de déploiement longitudinal X, le bloc structural élémentaire comportant deux plateformes respectivement inférieure (13) et supérieure (12) parallèles à un plan YZ orthogonal à l'axe X et N étages (E1,..., Ei, Ei+1,..., EN) empilés les uns au-dessus des autres parallèlement à l'axe de déploiement longitudinal X, où N est supérieur à 1 et où i est compris entre 1 et N-1 chaque étage (Ei) comportant au moins six bras de liaison (11) longitudinaux flexibles articulés par mètres-ruban, qui en position déployée sont dans des plans parallèles à l'axe X et sont inclinés par rapport à l'axe X, les N étages étant fixés entre eux deux à deux par l'intermédiaire de plateformes de liaison (15) parallèles au plan YZ, deux étages inférieur et supérieur contigus (Ei, Ei+1) étant décalés angulairement l'un par rapport à l'autre par une rotation autour de l'axe de déploiement X, et comportant des moyens de régulation de la vitesse du déploiement du mât qui comprennent une poulie principale motorisée (160) fixée à la plateforme inférieure (13), et des poulies secondaires non motorisées (161 a, 161 b) aptes à être entraînées par la poulie principale (160) au moyen d'au moins un câble (162a, 162b) ou d'un ruban.

2. Mât déployable selon la revendication précédente, **caractérisé en ce qu'**au moins une poulie secondaire (161 a, 161b) est fixée à la plateforme supérieure (12) et à chaque plateforme de liaison (15) et **en ce qu'**un même câble (162a, 162b) ou ruban relie des poulies secondaires des différentes plateformes à la poulie principale (160).

3. Mât déployable selon la revendication 1, **caractérisé en ce que** les poulies secondaires (161 a, 161 b) sont fixées à la plateforme inférieure (13), la poulie principale (160) comporte autant d'étages que de poulies secondaires et **en ce que** les moyens de régulation de la vitesse comprennent autant de câbles (162a, 162b) ou rubans que de poulies secondaires, respectivement fixés à la plateforme supérieure (12) et à chaque plateforme de liaison (15).

4. Mât déployable selon la revendication 1, **caractérisé en ce que en ce que** les poulies secondaires (161 a, 161 b) sont fixées à la plateforme inférieure (13), la poulie principale (160) comporte autant d'étages que de poulies secondaires et **en ce que** les moyens de régulation de la vitesse comprennent autant de câbles (162a, 162b) ou rubans que d'étages de la poulie principale (160) et/ou de plateformes mobiles (15) et supérieure (12), les câbles ou rubans étant fixés à la plateforme supérieure (12).

5. Mât déployable selon la revendication précédente, **caractérisé en ce que** deux étages contigus (Ei, Ei+1) respectivement inférieur et supérieur, sont fixés entre eux par une plateforme de liaison (15) commune aux deux étages contigus (Ei, Ei+1).

6. Mât déployable selon l'une des revendications précédentes, **caractérisé en ce que** chaque plateforme supérieure (12), inférieure (13) et de liaison (15) comporte des pattes de fixation (14) regroupées par paires régulièrement réparties, chaque patte de fixation étant dédiée à la fixation d'une extrémité (111) d'un bras de liaison.

7. Mât déployable selon l'une des revendications précédentes, **caractérisé en ce que** les pattes de fixation (14) sont orientées vers l'extérieur du mât et **en ce que** pour chaque paire de pattes de fixation, les bras de liaison en configuration pliée sont orientés d'un angle compris entre 0° et 45° dans le plan YZ, tangentiellement par rapport à la plateforme.

8. Mât déployable selon l'une des revendications précédentes, **caractérisé en ce que** chaque mètre ruban (11) présente des zones de pliage (112) à section en arc de cercle et des zones de non pliage (113) à section en arc de cercle et **en ce que** l'arc de cercle des zones de non pliage est plus long que celui des zones de pliage.

9. Mât déployable selon la revendication précédente, **caractérisé en ce que** les zones de pliage (112) sont situées aux deux extrémités (111) du bras de liaison et en une zone intermédiaire, et **en ce que** les sections en arc de cercle des zones aux extrémités sont diamétralement opposées par rapport à la section de la zone intermédiaire.

10. Mât déployable selon la revendication 8, **caractérisé en ce que** les zones de pliage (112) sont situées aux deux extrémités (111) et en une zone intermédiaire et ont une section en arc de cercle, et **en ce que** les sections des zones de non pliage (113) ont une section tubulaire.

11. Mât déployable selon l'une des revendications précédentes, **caractérisé en ce que** chaque plateforme de liaison (15) comporte au moins six paires de pattes de fixation (14).

12. Mât déployable selon l'une des revendications précédentes, **caractérisé en ce que** tous les bras de liaison (11) sont identiques.

13. Mât déployable selon l'une des revendications précédentes, **caractérisé en ce qu'**il comporte plusieurs blocs structuraux identiques (10) empilés les uns au-dessus des autres.

14. Mât déployable selon l'une des revendications précédentes, **caractérisé en ce qu'**un dispositif de verrouillage-libération du déploiement (111, 114, 163a, 163b) est positionné sur chaque plateforme de liaison (15) pour permettre après le déploiement de ladite plateforme, la libération de la plateforme contigüe qui lui est supérieure.

15. Mât déployable selon la revendication précédente, **caractérisé en ce que** les extrémités (111) de bras de liaison sous forme de mètres-rubans ont un profil variant selon la position déployée ou pliée des bras de liaison, et **en ce que** le dispositif de verrouillage-libération comporte des moyens de verrouillage-libération en fonction dudit profil.

16. Satellite **caractérisé en ce qu'**il comporte au moins un mât déployable à déploiement spontané autonome, selon l'une des revendications précédentes.

## Patentansprüche

1. Ausfahrbarer Mast mit spontaner autonomer Ausfahrbewegung, der mindestens einen grundlegenden Strukturblock (10) mit einer Ausfahrlängsachse X aufweist, wobei der grundlegende Strukturblock zwei Plattformen, jeweils eine untere (13) und eine obere (12), die parallel zu einer Ebene YZ sind, die orthogonal zur Achse X verläuft, und N Stufen (E1,..., Ei, Ei+1,..., EN) aufweist, die parallel zur Ausfahrlängsachse X übereinander gestapelt sind, wobei N größer als 1 ist und wobei i zwischen 1 und N-1 liegt, wobei jede Stufe (Ei) mindestens sechs längliche, flexible Verbindungsarme (11) aufweist, die durch Maßbänder gelenkig verbunden sind, die sich in ausgefahrener Position in zur Achse X parallelen Ebenen befinden und in Bezug auf die Achse X geneigt sind, wobei die N Stufen untereinander jeweils paarweise mittels Verbindungsplattformen (15) befestigt sind, die parallel zur Ebene YZ verlaufen, wobei die beiden aneinander angrenzenden, jeweils oberen und unteren Stufen (Ei, Ei+1) in Bezug zueinander durch eine Drehung um die Ausfahrachse X winklig versetzt sind und Mittel zur Geschwindigkeitsregulierung des Ausfahrens des Masts aufweisen, die eine motorisierte Hauptlaufrolle (160) umfassen, die an der unteren Plattform (13) befestigt ist, und sekundäre, nicht motorisierte Laufrollen (161a, 161b), die fähig sind, durch die Hauptlaufrolle (160) mittels mindestens eines Kabels (162a, 162b) oder eines Bands angetrieben zu werden.

2. Ausfahrbarer Mast nach dem vorhergehenden Anspruch, **dadurch gekennzeichnet, dass** mindestens eine sekundäre Laufrolle (161a, 161b) an der oberen Plattform (12) und an jeder Verbindungsplattform (15) befestigt ist, und dadurch, dass ein selbes Kabel (162a, 162b) oder Band die sekundären Laufrollen der verschiedenen Plattformen mit der Hauptlaufrolle (160) verbindet.

3. Ausfahrbarer Mast nach Anspruch 1, **dadurch gekennzeichnet, dass** die sekundären Laufrollen (161a, 161b) an der unteren Plattform (13) befestigt sind, die Hauptlaufrolle (160) so viele Stufen wie sekundäre Laufrollen aufweist, und dadurch, dass die Mittel zur Geschwindigkeitsregulierung genauso viele Kabel (162a, 162b) oder Bänder wie sekundäre Laufrollen aufweisen, die jeweils an der oberen Plattform (12) und an jeder Verbindungsplattform (15) befestigt sind.

4. Ausfahrbarer Mast nach Anspruch 1, **dadurch gekennzeichnet, dass** die sekundären Laufrollen (161a, 161b) an der unteren Plattform (13) befestigt sind, die Hauptlaufrolle (160) genauso viele Stufen wie sekundäre Laufrollen aufweist, und dadurch, dass die Mittel zur Geschwindigkeitsregulierung genauso viele Kabel (162a, 162b) oder Bänder wie Stufen der Hauptlaufrolle (160) und/oder mobile Plattformen (15) und die obere Plattform (12) aufweisen, wobei die Kabel oder Bänder an der oberen Plattform (12) befestigt sind.

5. Ausfahrbarer Mast nach dem vorhergehenden Anspruch, **dadurch gekennzeichnet, dass** zwei aneinander angrenzende, jeweils untere und obere Stufen (Ei, Ei+1) untereinander durch eine Verbindungsplattform (15) befestigt sind, die den beiden aneinander angrenzenden Stufen (Ei, Ei+1) gemeinsam ist.

6. Ausfahrbarer Mast nach einem der vorhergehenden Ansprüche, **dadurch gekennzeichnet, dass** jede obere Plattform (12), untere Plattform (13) und Verbindungsplattform (15) Befestigungslaschen (14) aufweist, die in regelmäßig verteilten Paaren gruppiert sind, wobei jede Befestigungslasche zur Befestigung eines Endes (111) eines Verbindungsarms dient.

7. Ausfahrbarer Mast nach einem der vorhergehenden Ansprüche, **dadurch gekennzeichnet, dass** die Befestigungslaschen (14) zur Außenseite des Masts ausgerichtet sind, und dadurch, dass für jedes Paar von Befestigungslaschen die Verbindungsarme in gefalteter Konfiguration in einem Winkel zwischen 0° und 45° in der Ebene YZ tangential zur Plattform ausgerichtet sind.

8. Ausfahrbarer Mast nach einem der vorhergehenden Ansprüche, **dadurch gekennzeichnet, dass** jedes Maßband (11) Faltzonen (112) mit Kreisbogenquerschnitt und Zonen ohne Faltung (113) mit Kreisbogenquerschnitt hat, und dadurch, dass der Kreisbogen der Zonen ohne Faltung länger als derjenige der Faltzonen ist.

9. Ausfahrbarer Mast nach dem vorhergehenden Anspruch, **dadurch gekennzeichnet, dass** sich die Faltzonen (112) an den zwei Enden (111) des Verbindungsarms und in einer Zwischenzone befinden, und dadurch, dass die Kreisbogenquerschnitte der Zonen an den Enden diametral entgegengesetzt sind in Bezug auf den Querschnitt der Zwischenzone.

10. Ausfahrbarer Mast nach Anspruch 8, **dadurch gekennzeichnet, dass** sich die Faltzonen (112) an den zwei Enden (111) und in einer Zwischenzone befinden und einen Kreisbogenquerschnitt haben, und dadurch, dass die Querschnitte der Zonen ohne Faltung (113) einen röhrenförmigen Querschnitt haben.

11. Ausfahrbarer Mast nach einem der vorhergehenden Ansprüche, **dadurch gekennzeichnet, dass** die Verbindungsplattform (15) mindestens sechs Paare von Befestigungslaschen (14) aufweist.

12. Ausfahrbarer Mast nach einem der vorhergehenden Ansprüche, **dadurch gekennzeichnet, dass** alle Befestigungsarme (11) identisch sind.

13. Ausfahrbarer Mast nach einem der vorhergehenden Ansprüche, **dadurch gekennzeichnet, dass** er mehrere identische Strukturblöcke (10) aufweist, die übereinander gestapelt sind.

14. Ausfahrbarer Mast nach einem der vorhergehenden Ansprüche, **dadurch gekennzeichnet, dass** eine Verriegelungs-Freigabe-Vorrichtung der Ausfahrbewegung (111, 114, 163a, 163b) auf jeder Verbindungsplattform (15) positioniert ist, um nach dem Ausfahren der Plattform die Freigabe der daran angrenzenden Plattform, die darüber liegt, zu gestatten.

15. Ausfahrbarer Mast nach dem vorhergehenden Anspruch, **dadurch gekennzeichnet, dass** die Enden (111) der Verbindungsarme in Form von Maßbändern ein Profil haben, das je nach ausgefahrener oder gefalteter Position der Verbindungsarme unterschiedlich ist, und dadurch, dass die Verriegelungs-Freigabe-Vorrichtung Mittel zur Verrieglung-Freigabe in Abhängigkeit vom Profil aufweisen.

16. Satellit, **dadurch gekennzeichnet, dass** er mindestens einen ausfahrbaren Mast mit spontaner autonomer Ausfahrbewegung nach einem der vorhergehenden Ansprüche aufweist.

## Claims

1. Deployable mast with autonomous spontaneous deployment comprising at least one elementary structural unit (10) which has a longitudinal deployment axis X, the elementary structural unit comprising two platforms, a lower platform (13) and an upper platform (12), respectively, which are parallel with a plane YZ which is orthogonal with respect to the axis X and N stages (E1,..., Ei, Ei+1,... EN) which are stacked one above the other parallel with the longitudinal deployment axis X, where N is greater than 1 and where i is between 1 and N-1, each stage (Ei) comprising
at least six flexible longitudinal connection arms (11) which are articulated by tape springs which, in the deployed position, are in planes parallel with the axis X and are inclined relative to the axis X, the N stages being fixed to each other in pairs by means of connection platforms (15) which are parallel with the plane YZ, two contiguous lower and upper stages (Ei, Ei+1) being offset angularly with respect to each other by means of a rotation about the deployment axis X and comprising means for controlling the speed of the deployment of the mast which comprise a motorised main pulley (160) which is fixed to the lower platform (13), and secondary non-motorised pulleys (161a, 161b) which are capable of being driven by the main pulley (160) using at least one cable (162a, 162b) or a tape spring.

2. Deployable mast according to the preceding claim, **characterised in that** at least one secondary pulley (161a, 161b) is fixed to the upper platform (12) and to each connection platform (15) and **in that** the same cable (162a, 162b) or tape spring connects secondary pulleys of the different platforms to the main pulley (160).

3. Deployable mast according to claim 1, **characterised in that** the secondary pulleys (161a, 161b) are fixed to the lower platform (13), the main pulley (160) comprises as many stages as secondary pulleys, and **in that** the means for controlling the speed comprise as many cables (162a, 162b) or tape springs as secondary pulleys which are fixed to the upper platform (12) and to each connection platform (15), respectively.

4. Deployable mast according to claim 1, **characterised in that** the secondary pulleys (161a, 161b) are fixed to the lower platform (13), the main pulley (160) comprises as many stages as secondary pulleys and **in that** the means for controlling the speed comprise as many cables (162a, 162b) or tape springs as stages of the main pulley (160) and/or movable platforms (15) and the upper platform (12), the cables or tape springs being fixed to the upper platform (12).

5. Deployable mast according to the preceding claim, **characterised in that** two contiguous lower and upper stages (Ei, Ei+1), respectively, are fixed together by means of a connection platform (15) which is common to the two contiguous stages (Ei, Ei+1).

6. Deployable mast according to any one of the preceding claims, **characterised in that** each upper platform (12), lower platform (13) and connection platform (15) comprises fixing lugs (14) which are grouped in pairs which are distributed in a regular manner, each fixing lug being dedicated to fixing one end (111) of a connection arm.

7. Deployable mast according to any one of the preceding claims, **characterised in that** the fixing lugs (14) are orientated towards the outer side of the mast and **in that** for each pair of fixing lugs, the connection arms in a folded configuration are orientated at an angle between 0° and 45° in the plane YZ, tangentially relative to the platform.

8. Deployable mast according to any one of the preceding claims, **characterised in that** each tape spring (11) has folding zones (112) having a cross-section in the form of a circular arc and non-folding zones (113) having a cross-section in the form of a circular arc and **in that** the circular arc of the non-folding zones is longer than that of the folding zones.

9. Deployable mast according to the preceding claim, **characterised in that** the folding zones (112) are located at the two ends (111) of the connection arm and in an intermediate zone, and **in that** the cross-sections in the form of a circular arc of the zones at the ends are diametrically opposed relative to the cross-section of the intermediate zone.

10. Deployable mast according to claim 8, **characterised in that** the folding zones (112) are located at the two ends (111) and in an intermediate zone and have a cross-section in the form of a circular arc, and **in that** the cross-sections of the non-folding zones (113) have a tubular cross-section.

11. Deployable mast according to any one of the preceding claims, **characterised in that** each connection platform (15) comprises at least six pairs of fixing lugs (14).

12. Deployable mast according to any one of the preceding claims, **characterised in that** all the connection arms (11) are identical.

13. Deployable mast according to any one of the preceding claims, **characterised in that** it comprises a plurality of identical structural units (10) which are stacked one above the other.

14. Deployable mast according to any one of the preceding claims, **characterised in that** a device for locking/release of the deployment (111, 114, 163a, 163b) is positioned on each connection platform (15) in order to enable, after the deployment of the platform, the release of the contiguous platform which is above it.

15. Deployable mast according to the preceding claim, **characterised in that** the ends (111) of the connection arms in the form of tape springs have a profile which varies in accordance with the deployed or folded position of the connection arms, and **in that** the locking/release device comprises means for locking/release in accordance with the profile.

16. Satellite, **characterised in that** it comprises at least one deployable mast with autonomous spontaneous deployment according to any one of the preceding claims.
